**Europäisches Patentamt**

**European Patent Office**

**Office européen des brevets**

(11) Veröffentlichungsnummer: **0 237 034**
**B1**

(12) # EUROPÄISCHE PATENTSCHRIFT

(45) Veröffentlichungstag der Patentschrift:
**13.12.89**

(51) Int. Cl.⁴: **B26D 7/08, B26B 13/00**

(21) Anmeldenummer: **87103445.0**

(22) Anmeldetag: **10.03.87**

(54) Schneidwerkzeug.

(30) Priorität: **10.03.86 DE 3607907**

(43) Veröffentlichungstag der Anmeldung:
**16.09.87 Patentblatt 87/38**

(45) Bekanntmachung des Hinweises auf die Patenterteilung:
**13.12.89 Patentblatt 89/50**

(84) Benannte Vertragsstaaten:
**AT CH FR IT LI**

(56) Entgegenhaltungen:
**DE-A- 2 304 237**
**DE-A- 3 447 962**
**DE-B- 2 504 817**
**DE-C- 764 144**
**GB-A- 1 442 030**

(73) Patentinhaber: **Gervé, Andreas, Dr.-Ing.,
Kriegsstrasse 180, D-7500 Karlsruhe(DE)**
Patentinhaber: **Wiesner, Lothar, Dr. rer. nat., Im
Schmittergarten 2, D-5068 Odenthal(DE)**

(72) Erfinder: **Gervé, Andreas, Dr.-Ing., Kriegsstrasse 180,
D-7500 Karlsruhe(DE)**
Erfinder: **Wiesner, Lothar, Dr. rer. nat., Im
Schmittergarten 2, D-5068 Odenthal(DE)**

(74) Vertreter: **Liesegang, Roland, Dr.-Ing., FORRESTER &
BOEHMERT Widenmayerstrasse 4 Postfach 22 01 37,
D-8000 München 22(DE)**

ACTORUM AG

## Beschreibung

Die Erfindung betrifft ein Schneidwerkzeug, dessen Schneide unter einem Winkel zueinander verlaufende, an der Schneidkante sich treffende Flächen aufweist und implantierte Ionen enthält (DE-B 2 504 817).

Schneidwerkzeuge wie Messer oder Scheren werden im Gebrauch stumpf. Sie müssen deshalb in regelmäßigen Abständen während ihrer Gebrauchsdauer nachgeschliffen werden. Das Stumpfwerden ist auf einen Verschleiß der Schneidkante zurückzuführen. Zur Erhöhung der Korrosionsbeständigkeit und der Standzeit ist bekannt, in die Schneidkanten von Schneidwerkzeugen Ionen zu implantieren.

Der Erfindung liegt die Aufgabe zugrunde, bei einem Schneidwerkzeug der eingangs beschriebenen Art ein Nachschleifen möglichst zu vermeiden.

Zur Lösung dieser Aufgabe ist bei einem Schneidwerkzeug der eingangs beschriebenen Art erfindungsgemäß vorgesehen, daß in die Oberfläche nur einer der beiden Flächen Ionen von Fremdatomen implantiert sind.

Die Implantation von Ionen von Fremdatomen in die Oberflächen von Maschinenteilen zur Erhöhung des Verschleißschutzes ist auch allgemein bekannt (A. Gervé, B. Kehrwald, L. Wiesner, T.W. Conlon, G. Dearnaley (1984): "Continuous determination of the wear reducing effect of ion implantation on gears by double labelling radionuclide technique." Arbeitsgemeinschaft Ionenstrahltechnik Odenthal, AERE Harwell).

Bei einer Ionenimplantation in eine dem Verschleiß ausgesetzte Fläche wird deren Härte angehoben und damit der Verschleißschutz erhöht.

Die Erfindung macht sich dies zunutze. Dadurch, daß nur eine der beiden am Schneidvorgang beteiligten Flächen der Schneide mit Ionen implantiert ist, werden eindeutige Beanspruchungsverhältnisse geschaffen, welche den mit der Anzahl der Schneidvorgänge zunehmenden Verschleiß auf die nicht implantierte Fläche beschränkt. Dies führt überraschenderweise zu einem Selbstschärfeffekt.

Bei einem gemäß der Erfindung behandelten Schneidwerkzeug wird also nicht nur der Verschleiß vermindert und damit die Standzeit erhöht sondern aufgrund des beschriebenen Selbstschärfeffektes ein Nachschleifen über die Gebrauchsdauer vermieden.

Besonders vorteilhaft ist es, wenn die Ionen nicht in die mit der Schneidebene zusammenfallende Fläche sondern in die zur Schneidrichtung geneigte Fläche implantiert werden.

Die Erfindung ist auch anwendbar auf ein Schneidwerkzeug mit Schneide und Gegenschneide, wie eine Schere. Dabei ist vorteilhaft, wenn auch in die Oberfläche einer der beiden Flächen der Gegenschneide Ionen implantiert sind.

Die Erfindung ist im folgenden anhand schematischer Zeichnungen an Ausführungsbeispielen näher erläutert. Es zeigen:

Fig. I einen Teilschnitt durch die Schneide eines Schneidwerkzeuges gemäß der Erfindung;

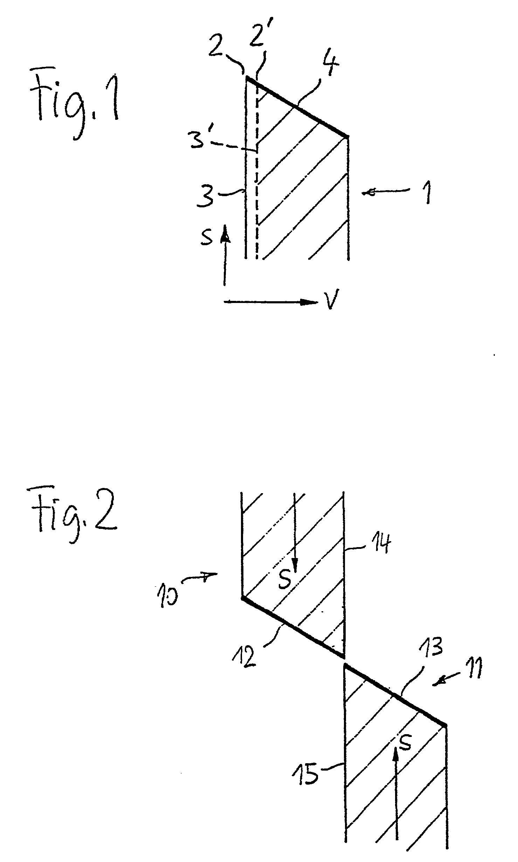

Fig. 2 einen Teilschnitt wie Fig. I durch Schneide und Gegenschneides eines Schneidwerkzeuges gemäß der Erfindung.

In Fig. I ist mit der Bezugszahl I der Schneidenteil eines Schneidwerkzeuges, wie eines Messers, bezeichnet. Das Schneidwerkzeug hat zwei an der Schneidkante 2 zusammenlaufende Flächen, von denen die eine 3 in Schneidrichtung S und die andere 4 unter einem Winkel geneigt dazu verläuft. Die Oberfläche dieser letztgenannten Fläche 4 ist mit Stickstoffionen bis in eine Tiefe von einigen Zehntel μm implantiert. Dadurch wird die Fläche 4 "gehärtet" und damit verschleißwiderstandsfähig. Im Gebrauch wird nur die nicht implantierte, "weiche" Fläche 3 abgetragen, was durch eine gestrichelte Linie 3' in Fig. I angedeutet ist. Die gestrichelte Linie 3' verlagert sich mit zunehmender Anzahl der Schnitte aufgrund des Verschleisses in Pfeilrichtung V, während die Pfeilrichtung S die Schneidrichtung in Fig. I anzeigt.

Es ist ersichtlich, daß unabhängig vom Verschleißzustand, d.h. von der Lage der Linie 3', die Schneidkante 2' selbsttätig stets scharf gehalten wird, weil die ionenimplantierte Fläche 4 nicht oder jedenfalls nicht in dem Maße wie die Fläche 3 im Gebrauch verschleißt.

Bei der Ausführung nach Fig. 2 bezeichnen die Bezugszahlen I0 und II Schneide und Gegenschneide eines Schneidwerkzeuges, wie einer Schere. In diesem Fall sind sowohl an der Schneide I0 wie auch an der Gegenschneide II die schräg zur Schneidrichtung S verlaufenden Flächen I2 bzw. I3 mit Ionen von Fremdatomen, z.B. Stickstoffatomen, implantiert, während die parallel zur Schneidrichtung S verlaufenden Flächen I4, I5 von Schneide und Gegenschneide "weich" belassen sind. Hierdurch werden sowohl die Schneide I0 als auch die Gegenschneide II selbstschärfend ausgebildet, d.h. behalten stets eine scharfe Schneidkante.

## Patentansprüche

1. Schneidwerkzeug, dessen Schneide (1;10,11) zwei unter einem Winkel zueinander verlaufende, an der Schneidkante (2) sich treffende Flächen (34;12–15) aufweist und implantierte Ionen enthält, dadurch **gekennzeichnet**, daß in die Oberfläche nur einer (4;12,13) der beiden Flächen (3,4;12–15 ) Ionen implantiert sind.

2. Schneidwerkzeug nach Anspruch 1, dadurch **gekennzeichnet**, daß in die zur Schneidrichtung geneigte Fläche (4;12,13) Ionen implantiert sind.

3. Schneidwerkzeug nach Anspruch 1 oder 2 mit Schneide (10) und Gegenschneide (11), dadurch **gekennzeichnet**, daß auch in die Oberfläche einer (13) der beiden Flächen (13,15) der Gegenschneide (11) Ionen implantiert sind.

## Claims

1. A cutting tool, whose cutting edge (1; 10, 11) comprises two surfaces (34; 12–15) extending at an angle to one another and meeting at the tool edge (2), and contains implanted ions, characterised in that ions are implanted in the surface of only one (4; 12, 13) of the two surfaces (3, 4; 12–15).

2. A cutting tool according to claim 1, characterised in that ions are implanted in the surface (4; 12, 13) inclined to the cutting direction.

3. A cutting tool according to claim 1 or 2 having a cutting edge (10) and a companion cutting edge (11), characterised in that ions are also implanted in the surface of one (13) of the two surfaces (13, 15) of the companion cutting edge (11).

**Revendications**

1. Outil tranchant dont la lame (1; 10, 11) présente deux plans qui forment un angle entre eux et qui se rencontrent sur l'arête centrale (2) et contient des ions implantés, caractérisé en ce que les ions sont implantés seulement dans la surface (4; 12, 13) de l'un des deux plans (3, 4; 12–15).

2. Outil tranchant selon la revendication 1, caractérisé en ce que des ions sont implantés dans le plan incliné par rapport au sens de la coupe (4; 12, 13).

3. Outil tranchant selon la revendication 1 ou 2, muni d'une lame (10) et d'une contre-lame (11), caractérisé en ce que des ions sont implantés aussi dans la surface (13) d'un des deux plans (13, 15) de la contre-lame (11).

Fig.1

Fig.2